# EUROPEAN PATENT APPLICATION

(11) **EP 4 484 471 A1**
(43) Date of publication of application: **01.01.2025**
(21) Application number: 23182540.7
(22) Date of filing: 29.06.2023
(51) Int. Cl.: C08J 3/075, C08J 3/12, C08J 3/24

(54) **METHOD OF FORMING SUPERABSORBENT POLYMER**

(71) Applicant: Formosa Plastics Corporation, Kaohsiung City (TW)
(72) Inventor: CHEN, Zhong-Yi, Kaohsiung City (TW); LIN, Yu-Sam, Kaohsiung City (TW); CHENG, Ping-Chun, Kaohsiung City (TW)
(74) Representative: Lang, Christian

(57) **Abstract**

A method of forming a superabsorbent polymers comprising free radical polymerization of a composition comprising unsaturated monomer aqueous solution, polymerization initiator and crosslinking agent, smashing, screening and surface crosslinking with a surface crosslinking agent and an ethylene-acrylic acid copolymer. The superabsorbent polymer has increased saline flow conductivity and absorption against pressure with great centrifuge retention capacity.

## Description

### BACKGROUND

### Field of Invention

The present invention relates to a method of forming a superabsorbent polymer. More particularly, the present invention relates to a method of forming a superabsorbent polymer with greater saline flow conductivity.

### Description of Related Art

Superabsorbent polymers is widely used, for example, as water retaining agent for agricultural or horticultural aspects, as an antidew condensation agent for construction materials, as a material used for removing water from petroleum, as waterproof cladding agent for outer layer of cable line, as personal sanitary products (e.g. diapers, feminine hygiene products, disposable wipes, and etc.), and among which, the diapers are the majority.

Absorptivity of the diapers depends on absorption rate, absorption capacity, and dryness. In recent years, it has been committed to reach thinness of the diapers, which decreases content of paper pulp (i.e. hydrophilic fiber) and increases content of superabsorbent polymers, thereby increasing a ratio of the superabsorbent polymers within absorbent structure of the diapers to achieve thinness of the diapers. However, the decrease of the content of hydrophilic fibers results in decreasing liquid storage space in short-term and slowing permeation rate of liquid, such that the liquid leaks without being absorbed immediately. Besides, in addition to having excellent absorption rate, the superabsorbent polymer should have high permeability. If the permeability for the liquid is poor, pores between particles will be blocked while the superabsorbent polymer absorbs liquid, thereby leading to colloid clogging situation and resulting in the leakage of the liquid from the absorber of the diapers, therefore decreasing the absorbability of the diapers.

Therefore, increasing the absorption rate and permeability of the superabsorbent polymers is one of the research focuses in the art currently. In the conventional method, polyvalent metal cation can be used to perform surface modification, or dihydroxyaluminum acetate can be used to increase saline flow conductivity. Permeability of the superabsorbent polymers can also be increased by using thermoplastic polymers, such as polyethylene or polypropylene, in a thermal treatment step or adding diazo compounds with amino groups as a foaming agent in an unsaturated monomer aqueous solution. In addition, in the unsaturated monomer aqueous solution, adding an encapsulated blowing agent or water-soluble alkoxysilane compounds subjects the produced superabsorbent polymers to have better absorption rate or great colloidal stability, respectively. Moreover, diffusibility and permeability for the liquid of the superabsorbent polymers after absorbing the liquid can be increased by mixing water-soluble polyvalent metal powders and adhesives with the superabsorbent polymers.

Additionally, the conventional superabsorbent polymers had been performed a surface crosslinking treatment to further crosslink within surface of the superabsorbent polymer, thereby increasing absorption rate, increasing strength of colloids, increasing anti-caking property and permeability for the liquid. For example, the conventional method includes dispersing the superabsorbent polymers and a crosslinking agent within an organic solvent to perform a surface crosslinking reaction; or mixing inorganic powders with the superabsorbent polymers to perform a crosslinking reaction; or following adding the crosslinking agent, perform a steam treatment; or performing a surface treatment by using the organic solvent, water and polyol; or performing a surface treatment by using the organic solvent, water and ether compound, and etc. However, although the conventional surface treating method can increase absorption rate and absorption against pressure, a centrifuge retention capacity of the superabsorbent polymer may be significantly decreased, thereby reducing performance of practical application.

Accordingly, it is needed to provide a superabsorbent polymer and a method of forming the same to increase saline flow conductivity and absorption against pressure of the superabsorbent polymer with great centrifuge retention capacity.

### SUMMARY

An aspect of the present invention provides a method of forming a superabsorbent polymer, which increases saline flow conductivity of the superabsorbent polymer by adding a reaction polymer to the surface crosslinking reaction.

According to the aspect of the present invention, providing the method of producing the superabsorbent polymer. The method includes performing a free radical polymerization reaction to a superabsorbent polymer composition to obtain a colloid gel, wherein the superabsorbent polymer composition includes an unsaturated monomer aqueous solution, a polymerization initiator, and a free radical polymerization crosslinking agent; smashing and screening the colloid gel to obtain a plural of superabsorbent polymer particles; and performing a surface crosslinking reaction to the superabsorbent polymer particles, a surface crosslinking agent and a reaction polymer to obtain the superabsorbent polymer, wherein the reaction polymer includes a polyethylene segment and a poly(acrylic acid) segment.

According to an embodiment of the present invention, the reaction polymer is an ethylene-acrylic acid copolymer, the ethylene-acrylic acid copolymer includes the polyethylene segment shown as following formula (1) and the poly(acrylic acid) segment shown as following formula (2). 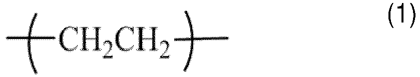 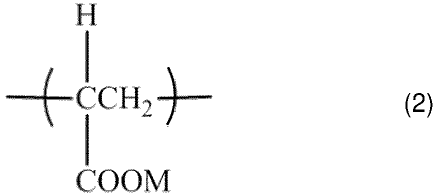 In the formula (2), M represents hydrogen, elements of group IA or elements of group IIA. Based on the ethylene-acrylic acid copolymer as 100 wt%, the polyethylene segment is 80 wt% to 99 wt%, and the poly(acrylic acid) segment is 1 wt to 20 wt%.

According to an embodiment of the present invention, the surface crosslinking reaction includes performing a thermal treatment at a temperature of 150°C to 210°C.

According to an embodiment of the present invention, based on a weight of the polyethylene segment of the reaction polymer as 100 wt%, the poly(acrylic acid) segment is 8 wt% to 20 wt%.

According to an embodiment of the present invention, based on a weight of the superabsorbent polymer particles as 100 wt%, an amount of the reaction polymer is 0.01 wt% to 10 wt%.

According to an embodiment of the present invention, a concentration of the unsaturated monomer aqueous solution is 20 wt% to 55 wt%.

According to an embodiment of the present invention, pH value of the unsaturated monomer aqueous solution is 5.5 to 7.0.

According to an embodiment of the present invention, the polymerization initiator comprises a thermal decomposition initiator, a redox initiator or a combination thereof.

According to an embodiment of the present invention, based on an amount of the unsaturated monomer aqueous solution as 100 wt%, an amount of the polymerization initiator is 0.001 wt% to 10 wt%.

According to an embodiment of the present invention, the method further includes drying the colloid gel at a temperature of 100°C to 180°C before smashing and screening the colloid gel.

According to an embodiment of the present invention, based on an amount of the unsaturated monomer aqueous solution as 100 wt%, an amount of the free radical polymerization crosslinking agent is 0.001 wt% to 5 wt%.

According to an embodiment of the present invention, an average particle size of the superabsorbent polymer particles is 0.06 mm to 1.00 mm.

According to an embodiment of the present invention, based on an amount of the superabsorbent polymer particles as 100 wt%, an amount of the surface crosslinking agent is 0.001 wt% to 10 wt%.

According to an embodiment of the present invention, the superabsorbent polymer, which is produced by the above method, is provided. A T20 value of the superabsorbent polymer is not greater than 180 seconds.

According to an embodiment of the present invention, a saline flow conductivity of the superabsorbent polymer is not less than 30×10⁻⁷ cm³-s/g.

According to an embodiment of the present invention, a centrifuge retention capacity of the superabsorbent polymer is greater than 20 g/g.

According to the aspect of the present invention, providing the method of producing the superabsorbent polymer. The method includes performing a free radical polymerization reaction to a superabsorbent polymer composition to obtain a plural of superabsorbent polymer particles, wherein the superabsorbent polymer composition includes an unsaturated monomer aqueous solution, a polymerization initiator, and a free radical polymerization crosslinking agent; and performing a surface crosslinking reaction to the superabsorbent polymer particles, a surface crosslinking agent and an ethylene-acrylic acid copolymer to obtain the superabsorbent polymer, wherein the ethylene-acrylic acid copolymer has a segment shown as following formula (3): 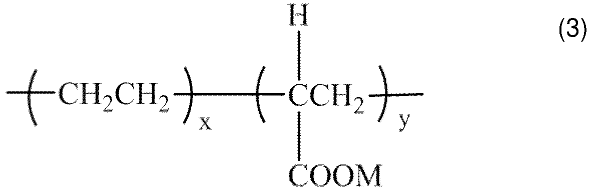 In the formula (3), M represents hydrogen, elements of group IA or elements of group IIA.

According to an embodiment of the present invention, the surface crosslinking reaction includes performing a thermal treatment at a temperature of 150°C to 210°C.

According to an embodiment of the present invention, based on a weight of the superabsorbent polymer particles as 100 wt%, an amount of the ethylene-acrylic acid copolymer is 0.01 wt% to 10 wt%.

According to an embodiment of the present invention, the ethylene-acrylic acid copolymer comprises a polyethylene segment and a poly(acrylic acid) segment, based on the ethylene-acrylic acid copolymer as 100 wt%, the polyethylene segment is 80 wt% to 99 wt%, and the poly(acrylic acid) segment is 1 wt to 20 wt%.

With the application of the superabsorbent polymers and the method of forming the same of the present invention, the saline flow conductivity and the absorption against pressure of the superabsorbent polymers are increased by adding the reaction polymer to the surface crosslinking reaction. The superabsorbent polymers also remain great centrifuge retention capacity to have practical application.

### DETAILED DESCRIPTION

As described above, the present invention provides the superabsorbent polymer and the method of forming the same, the saline flow conductivity and the absorption against pressure of the superabsorbent polymers are increased by adding the reaction polymer to the surface crosslinking reaction. The superabsorbent polymers also remain great centrifuge retention capacity to have practical application.

The method of forming a superabsorbent polymer of the present invention includes performing firstly a free radical polymerization reaction to a superabsorbent polymer composition to obtain a colloid gel. In some embodiments, the superabsorbent polymer composition includes an unsaturated monomer aqueous solution, a polymerization initiator, and a free radical polymerization crosslinking agent.

In some embodiments, the unsaturated monomer aqueous solution of the superabsorbent polymer compositions includes acid group monomers having unsaturated double bonds, such as acrylic acid. In some embodiments, the unsaturated monomer aqueous solution may be methacrylic acid, 2-acrylamido-2-methylpropanesulfonic acid, maleic acid (cis-butenedioic acid), maleic anhydride, fumaric acid (trans-butenedioic acid), and fumaric acid anhydride. The unsaturated monomer aqueous solution may include but not limit to one type of monomer, but also select two or more aforementioned monomer aqueous solutions.

In some embodiments, a concentration of the unsaturated monomer aqueous solution may be, but not limit to, 20 wt% to 55 wt%, and 30 wt% to 45 wt% is preferable. Generally, if the concentration of the unsaturated monomer aqueous solution is 20 wt% to 55 wt%, viscosity of products after polymerization is suitable; and thus it's easier to perform machining, and heat of free radical polymerization reaction is more controllable.

In some alternative embodiments, other hydrophilic monomers with unsaturated double bonds may be selectively added, such as acrylamide, methacrylamide, 2-carboxyethyl acrylate, 2-carboxyethyl methacrylate, methyl acrylate, ethyl acrylate, dimethylamino acrylamide, and acrylamidopropyltrimonium chloride. However, an adding amount of the hydrophilic monomer is based on a principle of not destroying physical properties (such as centrifuge retention capacity and absorption rate) of the superabsorbent polymer.

In some embodiments, the unsaturated monomer aqueous solution may be directly subjected to the polymerization reaction; or may be firstly partially neutralized with a neutralizing agent to become a neutral solution or a weak acidic solution and then subjected to the polymerization reaction. In these embodiments, the neutralizing agent includes hydroxides or carbonates of alkali metal or alkaline earth metal (e.g. sodium hydroxide, potassium hydroxide, sodium carbonate, potassium carbonate, sodium bicarbonate and potassium bicarbonate), amino compounds or a combination thereof. In some embodiments, a neutralizing concentration of the unsaturated monomer aqueous solution is 45 mol% to 85 mol%. When the neutralizing concentration is within the aforementioned range, the unsaturated monomer aqueous solution may have a pH value suitable to be subjected to the free radical polymerization reaction, and may not cause damage once contacting with human body carelessly. It is noted that the neutralizing concentration herein is defined as a ratio of mole number of the alkaline solution to mole number of the unsaturated monomer aqueous solution, or it may also defined as percentage of acid group being neutralized in the unsaturated monomer aqueous solution.

In some embodiments, the pH value of the unsaturated monomer aqueous solution is not less than 5.5, preferably is 5.5 to 7.0, and more preferably is 5.5 to 6.5. If the pH value of the unsaturated monomer aqueous solution is within 5.5 to 7.0, it may not remain great amount of unreacted monomer in the solution after polymerization, and the produced superabsorbent polymers may have better physical properties and greater absorption capacity.

In some embodiments, water-soluble polymers are also selectively added in the superabsorbent polymer composition to reduce processing cost. The water-soluble polymer includes partially saponified or fully saponified polyvinyl alcohol, polyethylene glycol, polyacrylic acid, polyacrylamide, starch or starch derivatives, such as methyl cellulose, acrylate methyl cellulose, ethyl cellulose, and etc., and preferably, the starch and partially saponified or fully saponified polyvinyl alcohols is used individually or are used after mixing. In these embodiments, it is not limiting in molecular weight of the water-soluble polymers. Based on the amount of the unsaturated monomer aqueous solution as 100 wt%, an adding amount of the water-soluble polymer is on a principle that physical properties of the superabsorbent polymer are not decreased, and generally the adding amount is 0 wt% to 20 wt%, preferably is 0 wt% to 10 wt%, and more preferably is 0 wt% to 5 wt%.

Pre-polymerization reaction begins with decomposition of the polymerization initiator to generate free radicals. In some embodiments, based on an amount of the unsaturated monomer aqueous solution as 100 wt%, a suitable amount of the polymerization initiator is 0.001 wt% to 10 wt%, and 0.1 wt% to 5 wt% is preferable. If the amount of the polymerization initiator is within the aforementioned range, a reacting rate of the free radical polymerization reaction is suitable, economic efficiency of the reaction is better, heat of the reaction is more controllable, and it may avoid forming solid gel due to excessive polymerization.

In some embodiments, the polymerization initiator includes a thermal decomposition initiator, a redox initiator or a combination thereof. In some embodiments, the thermal decomposition initiator comprises peroxide compounds (for example, hydrogen peroxide, di-t-butyl peroxide, peroxyamide or persulfate (including ammonium salt and alkali metal salt)) and azo compounds (for example, 2,2'-azobis (2-amidinopropane) dihydrochloride salt or 2,2'-azobis (N,N-dimethylene isobutylamidine) dihydrochloride salt). In some embodiments, the redox initiators comprise bisulfite salt, ascorbic acid or ferrous salt. The polymerization initiators are better used by combining the thermal decomposition initiators and the redox initiators, in which the redox initiators generate free radicals, and when the free radicals transfer to the monomers, the polymerization reaction is induced, and thus great heat energy released from the polymerization reaction increases temperature. When it reaches specific temperature, the thermal decomposition initiators are further decomposed, such that the polymerization reaction can be more completed to avoid remaining excess unreacted monomers.

The free radical polymerization crosslinking agent in the superabsorbent polymer composition makes the superabsorbent polymer composition have suitable degree of crosslinking, thereby increasing processability of the superabsorbent polymer composition after the polymerization. In some embodiments, the free radical polymerization crosslinking agent may be selected as compounds including two or more unsaturated double bonds, such as N,N-bis(2-propenyl)amine, N,N-methylene bisacrylamide, N,N-methylene bismethacrylamide, propylene acrylate, ethylene glycol diacrylate, polyethylene glycol) diacrylate, ethylene glycol dimethacrylate, polyethylene glycol dimethyl acrylate, glycerol triacrylate, glycerol trimethacrylate, glycerol added ethylene oxide triacrylate or trimethacrylate, trimethylolpropane trimethacrylate, trimethylolpropane triacrylate, N,N,N-tris(2-propenyl)amine, diacrylic acid ethylene glycol ester, polyoxyethylene triacrylate glycerol ester, diethylene polyoxyethylene glycerol triacrylate, dipropylene triethylene glycol ester, and etc. In some embodiments, the free radical polymerization crosslinking agent may be selected as compounds having two or more epoxy groups, such as sorbitol polyglycidyl ether, polyglycerol polyglycidyl ether, ethylene glycol diglycidyl ether, diethylene glycol diglycidyl ether, polyethylene glycol diglycidyl ether, diglycerol polyglycidyl ether, and etc. The free radical polymerization crosslinking agent can be used individually, or more than two types of the free radical polymerization crosslinking agent are mixed to be used.

In some embodiments, based on the amount of the unsaturated monomer aqueous solution as 100 wt%, an amount of the free radical polymerization crosslinking agent is 0.001 wt% to 5 wt%, and 0.01 wt% to 3 wt% is preferable. If the amount of the free radical polymerization crosslinking agent is within the aforementioned range, viscosity of the polymer solution after reaction is suitable, and thus the polymer solution is easier to be machined. Therefore, the absorption capacity of the following produced superabsorbent polymer is greater; that is, property of the superabsorbent polymer is better.

In some embodiments, the above free radical polymerization reaction may be performed in a batch reaction vessel or a conveyor reactor.

In some embodiments, the colloid gel is cut to have a diameter not greater than 20 mm by using a crusher, and it is preferable that a screening step is performed after the crushed colloid gel has the diameter not greater than 10 mm. In some embodiments, the screening step filters the colloid gel with the diameter smaller than 2.0 mm initially, and 0.05 mm to 1.50 mm is preferable. The colloid gel with the diameter greater than 2.0 mm should be redelivered to the reactor and cut again. The diameter should be controlled in the aforementioned range in order to avoid generating more fine powders in back-end process, and thermal conductivity of the superabsorbent polymers is better, thereby avoiding remaining excess monomers. Generally, while the particle size distribution of the superabsorbent polymers is narrower, the physical properties of the superabsorbent polymers are better, and it facilitates the following drying process.

In some embodiments, before performing the following operations, the drying process of the colloid gel is selectively performed. In some embodiments, the drying process is performed at temperature of 100°C to 180°C. The drying process performed in the aforementioned temperature range may effectively control drying time, and may effectively control degree of crosslinking to avoid remaining great amount of unreacted monomers.

Subsequently, the method of forming the superabsorbent polymers includes smashing and screening the colloid gel to obtain plural of superabsorbent polymer particles. In some embodiments, a particle size of the superabsorbent polymer particles is screened to a range of 0.06 mm to 1.00 mm, and 0.10 mm to 0.85 mm is preferable. When the particle size of the superabsorbent polymer particles is controlled within the aforementioned range, an amount of fine particles of the product may be decreased, and the absorptivity of the superabsorbent polymer may be better. Similarly, the particle size distribution of the superabsorbent polymers is narrower, the physical properties of the superabsorbent polymers are better.

Then, a surface crosslinking reaction is performed to the superabsorbent polymer particles, a surface crosslinking agent and a reaction polymer to obtain the superabsorbent polymer. The superabsorbent polymer is an insolvable hydrophilic polymer, whose interior has a uniform crosslinking structure. Typically, crosslinking is further performed at a surface of the superabsorbent polymer to increase the absorption rate, a strength of colloids, an anticaking property, the permeability for the liquid, and etc. The surface crosslinking reaction is performed with a surface crosslinking agent having functional groups, which can react with acid groups. Additionally, in order to further increase the saline flow conductivity of the obtained superabsorbent polymers, the present invention add the reaction polymer, such as ionomer, to jointly perform the surface crosslinking reaction.

In some embodiments, the surface crosslinking agent includes polyol, polyamine, a compound having two or more epoxy groups and alkylene carbonate. For example, the polyol may be glycerol, ethylene glycol, diethylene glycol, triethylene glycol, polyethylene glycol, propylene glycol; the polyamine may be ethylenediamine, diethylenediamine and triethylenediamine; the compound having at least two epoxy groups may be sorbitol polyglycidyl ether, polyglycerol polyglycidyl ether, ethylene glycol diglycidyl ether, diethylene glycol diglycidyl ether, diethylene glycol diglycidyl ether and diglycerol polyglycidyl ether; and the alkylene carbonate may be ethylene glycol carbonate, 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 1,3-dioxan-2-one, 4,6-dimethyl-1,3-dioxan-2-one and 1,3-dioxepan-2-one. The surface crosslinking agents may be used individually or combined two or more to perform reaction. In addition, according to the chosen surface crosslinking agent, it may be added directly, or it may be initially prepared as an aqueous solution or a hydrophilic organic solution and then added. The hydrophilic organic solvent includes, but not limit to methanol, ethanol, propanol, isobutanol, acetone, methyl ether, ethyl ether, and etc.

In some embodiments, based on the amount of the superabsorbent polymer particles as 100 wt%, an adding amount of the surface crosslinking agent is 0.001 wt% to 10 wt%, and 0.005 wt% to 5 wt% is preferable. When the adding amount of the surface crosslinking agent is within the aforementioned range, it subjects a surface of the superabsorbent polymer to have a crosslinking structure, and the absorptivity is further improved.

The superabsorbent polymer particles and the reaction polymer should be mixed homogeneously to effectively achieve effect of the present invention, thus a mixing device with better mixing effect is needed. In some embodiments, the mixing device may be a V-type mixer, a column mixer, a high-speed agitator, a spiral mixer, a flow mixer, a double arm kneading mixer, a double cone mixer, a ribbon mixer, Banbury mixer, a kneader, a rotating mixer or a screw extruder.

The above ionomer is a polymer including repeating unit composed of ionic unit in a macro molecule of electrically neutral repeating unit, in which ionic group is a portion of a practical polymer main chain. In some embodiments, the ionic group may be carboxylic groups, for example. In these embodiments, the ionomer may be an ethylene-acrylic acid copolymer (EAA), which includes a polyethylene segment with following formula (1) and a poly(acrylic acid) segment with following formula (2). 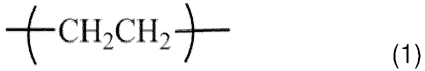 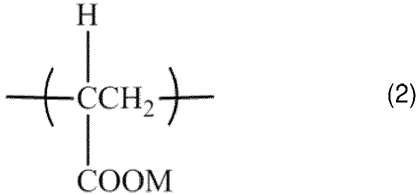 In the formula (2), M represents hydrogen, elements of group IA (e.g. Li, Na or K) or elements of group IIA (e.g. Ca or Mg). In such embodiments, based on the ethylene-acrylic acid copolymer as 100 wt%, the polyethylene segment is 80 wt% to 99 wt%, and the poly(acrylic acid) segment is 1 wt to 20 wt%.

In other embodiments the ionomer may be the ethylene-acrylic acid compound with following formula (3): 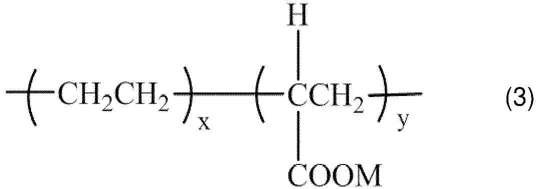 In the formula (3), M represents hydrogen, elements of group IA (e.g. Li, Na or K) or elements of group IIA (e.g. Ca or Mg). In some embodiments, M prefers to be elements of group IA.

In some embodiments, in the ethylene-acrylic acid copolymer, based on a weight of the polyethylene segment (i.e. the formula (1)) of the reaction polymer as 100 wt%, a weight of the poly(acrylic acid) segment (i.e. the formula (2)) is 8 wt% to 20 wt%. Within the ethylene-acrylic acid copolymer, the polyethylene segment is a hydrophobic group, while the poly(acrylic acid) segment is a hydrophilic group, which tends to absorb water. Therefore, if there is less polyethylene segment (such as the weight of the poly(acrylic acid) is less than 8 wt%), the absorptivity of the superabsorbent polymers is decreased; on the contrary, if there is excess polyethylene segment (such as the weight of the poly(acrylic acid) is greater than 20 wt%), the ionomer may absorb water in air to result it being congealed itself, and therefore the mixing effect of the superabsorbent polymer particles and the ionomer is not satisfactory, thus being not achieved the desired effect of the present invention.

In some embodiments, based on a weight of the superabsorbent polymer particles as 100 wt%, an amount of the reaction polymer is 0.01 wt% to 10 wt%. When the amount of the reaction polymer is within the aforementioned range, effect of increasing the absorptivity (such as the absorption against pressure) of the superabsorbent polymers is affectively achieved.

In some embodiments that the ionomers are the ethylene-acrylic acid copolymer, the surface crosslinking reaction includes performing a thermal treatment at a temperature of 150°C to 210°C. The thermal treatment performed at the aforementioned temperature can subject the ethylene-acrylic acid copolymer to be melted completely, thereby forming the superabsorbent polymers with better quality, that is, the superabsorbent polymers with better absorptivity.

As described above, the present invention can form the superabsorbent polymers with great saline flow conductivity (SFC), in which the saline flow conductivity can used to evaluate permeability for the liquid. When the superabsorbent polymers has better permeability for the liquid, problems of rewet of an absorber, bad dryness and leakage can be decreased. The saline flow conductivity indicates permeability for the liquid of the superabsorbent polymer after absorbing the liquid and having high pressure, when the liquid keeps entering the absorber, it is prone to pass the superabsorbent polymer with liquid absorbed, and diffuses into another superabsorbent polymer without liquid absorbed. The saline flow conductivity of the superabsorbent polymer of the present invention is not less than 30×10⁻⁷ cm³-s/g, and not less than 40×10⁻⁷ cm³-s/g is preferable.

Moreover, the superabsorbent polymers need to have great centrifuge retention capacity (CRC) and absorption against pressure (AAP) in order to assure that the absorber may not be broken or affecting the absorptivity by pressure applied externally after the superabsorbent polymers absorbing the liquid. In some embodiments, the centrifuge retention capacity of the superabsorbent polymers of the present invention is not less than 20 g/g, and not less than 25 g/g is preferable. In some embodiments, the absorption against pressure of the superabsorbent polymers of the present invention is greater than 15 g/g, preferably is greater than 20 g/g, and more preferably is greater than 23 g/g.

In addition, a liquid absorption of the dry superabsorbent polymers once contacting with the liquid may be evaluated by T20 value. When the superabsorbent polymer has a lower T20 value, it means that the dry superabsorbent polymers can easily absorb liquid. T20 value of the superabsorbent polymers of the present invention is not greater than 180 seconds, and not greater than 160 seconds is preferable. It is noted that T20 value is defined as how much time does 1 g superabsorbent polymers require for absorbing 20 g normal saline and 0.01 wt% alcohol ethoxylate compound solution under a pressure of 0.3 psi, in which the alcohol ethoxylate compound has 12 to 14 carbon atoms. The superabsorbent polymers of the present invention has both lower T20 value and greater saline liquid conductivity, thus decreasing rewet capacity of the absorber and increasing dryness of the diapers.

The absorber is lamellar absorber shaped by using the superabsorbent polymer of the present invention and hydrophilic fiber. In practical application, the above absorber may be disposed on polyethylene (PE) film without permeability for the liquid, and then non-woven fabric with permeability for the liquid is used as a surface layer; or the superabsorbent polymers are fixed the on an airlaid and/or non-woven fabric. The airlaid may be pulverized wood-pulp, crosslinked fiber fabric, cotton, wool, vinyl acetate fiber, and etc. Generally, based on the absorber is 100 wt%, an amount of the superabsorbent polymers in the absorber (or referred to a core concentration) is 20 wt% to less than 100 wt%, preferably is 40 wt% to less than 100 wt%, and more preferably is 50 wt% to less than 100 wt %. High amounts of superabsorbent polymers are used in the absorber can show benefits of the present invention more significantly. In general, basis weight (weight per unit area) of the above absorber is 0.01 g/cm² to 0.30 g/cm², and thickness is not greater than 30 mm.

### Preparation of reaction polymer

### Preparation example 1

1180 g ethylene-acrylic acid copolymers (CAS NO. 9019-86-0, purchased from Aldrich-Sigma, containing 18 wt% poly(acrylic acid) segment), 118 g sodium hydroxide and 5 g pure water were taken to a Banbury mixer to mix at a temperature of 150°C for 30 minutes, thereby obtaining the ethylene-acrylic acid copolymers (A) with neutralizing sodium ion.

### Preparation examples 2 and 3

The preparation example 1 was repeated. The difference from the preparation example 1 was that the ethylene-acrylic acid copolymers used in the preparation example 2 contains 15 wt% poly(acrylic acid) segment (CAS NO. 9010-77-9, purchased from Aldrich-Sigma, containing 15 wt% poly(acrylic acid) segment), and sodium hydroxide was replaced with 172 g magnesium hydroxide in the preparation example 3, thereby obtaining the ethylene-acrylic acid copolymers (B) with neutralizing sodium ion and the ethylene-acrylic acid copolymers (C) with neutralizing magnesium ion, respectively.

### Preparation examples 4 and 5

The preparation example 1 was repeated. The difference from the preparation example 1 was that the ethylene-acrylic acid copolymers was purchased from Exxon, in which the ethylene-acrylic acid copolymers used in preparation example 4 was Escor^{™} 5080 containing 10 wt% poly(acrylic acid) segment, while the ethylene-acrylic acid copolymers used in preparation example 5 was Escor^{™} 5020 containing 7.5 wt% poly(acrylic acid) segment, thereby obtaining the ethylene-acrylic acid copolymers (D) with neutralizing sodium ion and the ethylene-acrylic acid copolymers (E) with neutralizing sodium ion, respectively.

### Production of superabsorbent polymers

### Embodiment 1

503.12 g of sodium hydroxide solution with a concentration of 48 wt% was slowly added into a 2000 c.c. Erlenmeyer flask containing 621.03 g of acrylic acid and 670.74 g of water for 2 hours, in which adding ratio of sodium hydroxide/acrylic acid was within a range of 0.85 to 0.95, and a temperature of neutral reaction system in the flask was kept within 15°C to 40°C, thereby obtaining an unsaturated monomer aqueous solution with monomer concentration of 42 wt%, in which 70 mol% acrylic acid was partially neutralized to sodium acrylate, and a pH value was 5.69.

Subsequently, 1.36 g of N,N'-methylene bisacrylamide (as free radical polymerization reaction crosslinking agent) was added into the unsaturated monomer aqueous solution, and the temperature was maintained at about 20°C. Afterwards, 0.35 g of hydrogen peroxide, 4.15 g of sodium bisulfite and 4.15 g of ammonium persulfate were added as polymerization initiator to perform the free radical polymerization reaction.

A colloid gel produced from the reaction was smashed by a cutting pulverizer and was filtered to obtain the colloid gel with a particle size of 2 mm and less. Subsequently, a drying process was performed at the temperature of 130°C for 2 hours, and a sieve with a fixed particle size of 0.1 mm to 0.85 mm was used to filter, thus obtaining superabsorbent polymer particles.

Then, 200 g of the superabsorbent polymer was weighed and added into 2.5 g of the surface crosslinking agent, and further 0.1 g of the ethylene-acrylic acid copolymers (A) with neutralizing sodium ion was added. The surface crosslinking agent was an aqueous solution of ethylene glycol, aluminum sulfate and water mixed with volume ratio of 1 :0.5:2. Next, the thermal treatment was performed at a temperature of 160°C for 1 hour, and thus the superabsorbent polymer was obtained after cooling.

### Embodiments 2 to 6

The superabsorbent polymers of embodiments 2 to 6 were produced by using the similar processing step as embodiment 1. The difference was that embodiment 2 used 1.0 g ethylene-acrylic acid copolymers (A); embodiment 3 used 0.1 g ethylene-acrylic acid copolymers (B); embodiment 4 used 0.1 g ethylene-acrylic acid copolymers (C); embodiment 5 used 0.1 g ethylene-acrylic acid copolymers (D); and embodiment 6 used 4.63 g of polyethylene glycol 600-diacrylate (UM82-080, produced by EVERMORE CHEMICAL INDUSTRY CO, LTD.) to replace N,N'-methylene bisacrylamide as the free radical polymerization crosslinking agent.

### Comparative examples 1 to 6

The superabsorbent polymers of comparative examples 1 to 6 were also produced by using the similar processing step as embodiment 1. The difference is that comparative example 1 used the ethylene-acrylic acid copolymers without neutralization to replace the ethylene-acrylic acid copolymers (A); comparative example 2 used 0.1 g of the ethylene-acrylic acid copolymers (E); comparable example 3 did not add the ethylene-acrylic acid copolymers; comparable example 4 used 5 g of the ethylene-acrylic acid copolymers (E); comparable example 5 performs the thermal treatment at a temperature of 140°C; and comparable example 6 performed the thermal treatment at a temperature of 250°C.

### Evaluation method

In order to evaluate properties of the superabsorbent polymers of the present invention, the following test methods were used to analyze their physical properties. The evaluation was performed at room temperature (23±2°C) and relative air humidity of 45±10% unless otherwise specified. The superabsorbent polymers should be completely mixed before analyzing.

### Centrifuge Retention Capacity

Centrifuge Retention Capacity (CRC) was measured in accordance with ERT 441.3(10) test method regulated by European Disposables and Nonwovens Association (EDANA). The Centrifuge Retention Capacity test results of the superabsorbent polymer particles and the superabsorbent polymers are shown in table 1, respectively.

### Absorption against pressure

Absorption against pressure (AAP) was measured in accordance with ERT 442.3(10) test method regulated by EDANA. The absorption against pressure of the superabsorbent polymers for 0.9% of sodium chloride solution was tested under pressure of 4.9 kPa for 60 minutes. The test results of the superabsorbent polymers are shown in table 1.

### Saline flow conductivity

Saline flow conductivity (SFC, unit: 10⁻⁷ cm³-sec/g) was measured and calculated according to a method described in U.S. Patent Publication No. 5,562,646. The superabsorbent polymers were placed into Jayco synthetic urine for 60 minutes, and the flow conductivity of a 0.118M sodium chloride solution was measured under a confining pressure of 0.3 psi. The saline flow conductivities of the superabsorbent polymers are shown in table 1.

### T20 value

T20 value (unit: seconds) was measured and calculated according to a method described in U.S. Patent Publication No. 9,285,302. T20 value is defined as time of 1 g superabsorbent polymer required to absorb 20 g normal saline and 0.01 wt% alcohol ethoxylate compound solution, in which the alcohol ethoxylate compound has 12 to 14 carbon atoms. Average values of tests repeated three times are shown in table 1.

**Table 1**

| | CRC(g/g) | AAP(g/g) | SFC (10⁻⁷ cm³-s/g) | T20(sec) |
|---|---|---|---|---|
| Embodiment 1 | 28.5 | 25.3 | 72 | 151 |
| Embodiment 2 | 27.9 | 25.1 | 101 | 167 |
| Embodiment 3 | 27.9 | 24.3 | 81 | 162 |
| Embodiment 4 | 26.5 | 23.4 | 59 | 174 |
| Embodiment 5 | 27.9 | 24.7 | 76 | 160 |
| Embodiment 6 | 28.3 | 25.5 | 78 | 158 |
| Comparative example 1 | 27.7 | 24.2 | 70 | 213 |
| Comparative example 2 | 28.2 | 24.8 | 73 | 194 |
| Comparative example 3 | 29.9 | 25.1 | 19 | 221 |
| Comparative example 4 | 26.8 | 23.9 | 65 | 208 |
| Comparative example 5 | 29.1 | 20.8 | 18 | 252 |
| Comparative example 6 | 25.5 | 21 | 40 | 184 |

### Preparation of absorbers

An absorber-forming machine was used to mix and mold 10.0 g of the superabsorbent polymers and 10.0 g of pulverized wood pulp, in which a molding mesh was a metal net with 400 mesh (38 µm), and an area of the absorber was 160 cm² (8 cm × 20 cm). The molded absorber was placed on top of polyethylene film, and nonwoven fabric was then placed on the molded absorber. Next, a pressure of 18.39 kPa (area of 160 cm², weight of 30 Kg) was applied to the absorber. After the pressure was applied for 5 minutes, the molded absorber was adhered around with white glue for obtaining the absorber for test.

### Embodiments 7 to 12 and comparative examples 7 to 12

Embodiments 7 to 12 were absorbers prepared by the above method with the superabsorbent polymers of embodiments 1 to 6, respectively; while comparative examples 7 to 12 were absorbers also prepared by the above method with the superabsorbent polymers of comparative examples 1 to 6. Basis weight and thickness of the absorbers are shown in table 2.

### Rewet property of the absorber

When the rewet amount of the absorber is lower, it means that urine tolerance of the superabsorbent polymer is better. Test method is that 4.8 kPa of a weight with an area of 160 cm² and a weight of 7.8 Kg was placed on the absorbers of embodiments 7 to 12 and comparative examples 7 to 12. Then, 180 mL of synthetic urine (the Jayco synthetic urine described in U.S. Patent Publication No. 20040106745) was added to a center point of the absorber for three times (each adding was an interval of 30 minutes), and after the synthetic urine was completely added, the weight on the absorber was removed after 30 minutes. Then, 30 pieces of filter papers (8 cm × 20 cm), which has total weight of W1 weighed in advance, were put on the absorber, and 4.8 kPa of the weight was immediately put on the absorber for 5 minutes, so that the aforementioned filter papers absorbed liquid rewet from the absorber. Afterwards, the 30 pieces of the filter papers were weighed as W2. The rewet amount of the synthetic urine rewet from the absorber was (W2-W1). Test results are shown in table 2.

**Table 2**

| | basis weight (g/cm²) | thickness (mm) | rewet of the synthetic urine (g) |
|---|---|---|---|
| Embodiment 7 | 0.08 | 16 | 2.3 |
| Embodiment 8 | 0.08 | 15 | 1.9 |
| Embodiment 9 | 0.07 | 15 | 2 |
| Embodiment 10 | 0.07 | 16 | 2.4 |
| Embodiment 11 | 0.07 | 15 | 2.7 |
| Embodiment 12 | 0.08 | 16 | 2.2 |
| Comparative example 7 | 0.08 | 17 | 5.6 |
| Comparative example 8 | 0.08 | 17 | 4.2 |
| Comparative example 9 | 0.07 | 16 | 11.3 |
| Comparative example 10 | 0.07 | 15 | 8.8 |
| Comparative example 11 | 0.08 | 15 | 13.6 |
| Comparative example 12 | 0.08 | 16 | 10.5 |

According to the above test results, compared to comparative examples 1 to 6, embodiments 1 to 6 all had greater saline flow conductivity and lower T20 value by using specific amount of the ethylene-acrylic acid copolymers with neutralizing metal ion. In other words, the superabsorbent polymers of embodiments 1 to 6 not only had excellent saline flow conductivity but also better liquid diffusibility and conductivity in dry condition. Moreover, according to embodiments 7 to 12, which are the absorbers produced by the superabsorbent polymers of embodiments 1 to 6, they had liquid rewet amount less than 3.0 g, which are obviously lower than those of comparative examples 7 to 12, and therefore it represents embodiments 7 to 12 have better dryness.

Therefore, with the method of producing the superabsorbent polymer of the present invention, the saline flow conductivity of the superabsorbent polymers and liquid diffusibility of the superabsorbent polymers in dry condition are increased by using the reaction polymers to join the surface crosslinking reaction of the superabsorbent polymer particles. Moreover, the superabsorbent polymers still remain greater centrifuge retention capacity, thereby having practical application.

## Claims

1. A method of forming superabsorbent polymer, comprising:
performing a free radical polymerization reaction to a superabsorbent polymer composition to obtain a colloid gel, wherein the superabsorbent polymer composition comprises an unsaturated monomer aqueous solution, a polymerization initiator, and a free radical polymerization crosslinking agent;
smashing and screening the colloid gel to obtain a plurality of superabsorbent polymer particles; and
performing a surface crosslinking reaction to the superabsorbent polymer particles, a surface crosslinking agent and a reaction polymer to obtain the superabsorbent polymer, wherein the reaction polymer comprises a polyethylene segment and a poly(acrylic acid) segment.

2. The method of claim 1, wherein the reaction polymer is an ethylene-acrylic acid copolymer, the ethylene-acrylic acid copolymer comprises the polyethylene segment shown as following formula (1) and the poly(acrylic acid) segment shown as following formula (2), 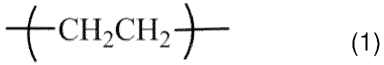 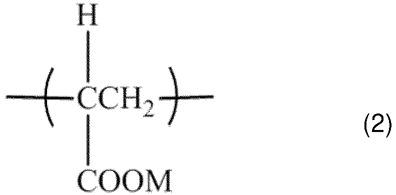
wherein in the formula (2), M represents hydrogen, elements of group IA or elements of group IIA; and
based on the ethylene-acrylic acid copolymer as 100 wt%, the polyethylene segment is 80 wt% to 99 wt%, and the poly(acrylic acid) segment is 1 wt to 20 wt%.

3. The method of claim 2, wherein the surface crosslinking reaction comprises performing a thermal treatment at a temperature of 150°C to 210°C.

4. The method of anyone of claims 1 to 3, wherein based on a weight of the polyethylene segment of the reaction polymer as 100 wt%, the poly(acrylic acid) segment is 8 wt% to 20 wt%.

5. The method of anyone of claims 1 to 4, wherein based on a weight of the superabsorbent polymer particles as 100 wt%, an amount of the reaction polymer is 0.01 wt% to 10 wt%.

6. The method of anyone of claims 1 to 5, wherein a concentration of the unsaturated monomer aqueous solution is 20 wt% to 55 wt%.

7. The method of anyone of claims 1 to 6, wherein the polymerization initiator comprises a thermal decomposition initiator, a redox initiator or a combination thereof.

8. The method of anyone of claims 1 to 7, wherein based on an amount of the unsaturated monomer aqueous solution as 100 wt%, an amount of the polymerization initiator is 0.001 wt% to 10 wt%.

9. The method of anyone of claims 1 to 8, wherein based on an amount of the unsaturated monomer aqueous solution as 100 wt%, an amount of the free radical polymerization crosslinking agent is 0.001 wt% to 5 wt%.

10. The method of anyone of claims 1 to 9, wherein based on an amount of the superabsorbent polymer particles as 100 wt%, an amount of the surface crosslinking agent is 0.001 wt% to 10 wt%.

11. The method of anyone of claims 1 to 10, wherein a T20 value of the superabsorbent polymer is not greater than 180 seconds.

12. A method of forming superabsorbent polymer, comprising:
performing a free radical polymerization reaction to a superabsorbent polymer composition to obtain a plurality of superabsorbent polymer particles, wherein the superabsorbent polymer composition comprises an unsaturated monomer aqueous solution, a polymerization initiator, and a free radical polymerization crosslinking agent; and
performing a surface crosslinking reaction to the superabsorbent polymer particles, a surface crosslinking agent and an ethylene-acrylic acid copolymer to obtain the superabsorbent polymer, wherein the ethylene-acrylic acid copolymer has a segment shown as following formula (3): 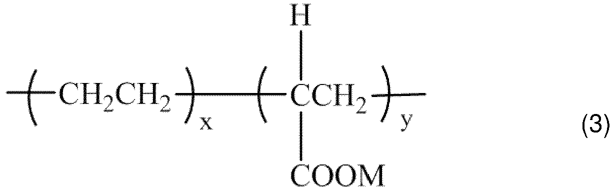 wherein in the formula (3), M represents hydrogen, elements of group IA or elements of group IIA.

13. The method of claim 12, wherein the surface crosslinking reaction comprises performing a thermal treatment at a temperature of 150°C to 210°C.

14. The method of anyone of claims 12 and 13, wherein based on a weight of the superabsorbent polymer particles as 100 wt%, an amount of the ethylene-acrylic acid copolymer is 0.01 wt% to 10 wt%.

15. The method of anyone of claims 12 to 14, wherein the ethylene-acrylic acid copolymer comprises a polyethylene segment and a poly(acrylic acid) segment, based on the ethylene-acrylic acid copolymer as 100 wt%, the polyethylene segment is 80 wt% to 99 wt%, and the poly(acrylic acid) segment is 1 wt to 20 wt%.
